# EUROPÄISCHE PATENTSCHRIFT

(11) **EP 2 467 246 B1**
(45) Veröffentlichungstag und Bekanntmachung des Hinweises auf die Patenterteilung: **31.08.2016**
(21) Anmeldenummer: 10739898.4
(22) Anmeldetag: 30.07.2010
(51) Int. Cl.: B29C 65/14, B29C 65/48

(54) **VERFAHREN ZUM ZUSAMMENFÜGEN VON BAUTEILEN**
METHOD FOR JOINING COMPONENTS
PROCÉDÉ POUR ASSEMBLER DES ÉLÉMENTS

(30) Priorität: 18.08.2009 DE 102009028613; 18.08.2009 US 234780 P
(43) Veröffentlichungstag der Anmeldung: 27.06.2012
(73) Patentinhaber: Airbus Operations GmbH, 21129 Hamburg (DE)
(72) Erfinder: LITZENBERGER, Karsten, 21698 Harsefeld (DE); EDELMANN, Klaus, 28199 Bremen (DE); SCHWEIM, Matthias, 24640 Schmalfeld (DE); SCHILDT, Rainer, 21734 Oederquart (DE)
(74) Vertreter: Isarpatent
(86) Internationale Anmeldenummer: PCT/EP2010/061076
(87) Internationale Veröffentlichungsnummer: WO 2011/020687

(56) Entgegenhaltungen:
- WO-A1-03/070838
- WO-A1-2005/073329
- WO-A2-2009/047010
- DE-A1-102008 044 208
- US-A1- 2006 002 746

## Beschreibung

Die vorliegende Erfindung betrifft ein Verfahren zum Zusammenfügen von Bauteilen, von denen wenigstens eines einen faserverstärkten Kunststoffwerkstoff aufweist.

Obwohl auf beliebige Bauteile anwendbar, werden die vorliegende Erfindung sowie die ihr zugrunde liegende Problematik in Bezug auf Rumpfschalenbauteile eines Flugzeugs näher erläutert.

Im modernen Flugzeugbau finden zunehmend faserverstärkte Verbundmaterialien wie zum Beispiel kohlefaserverstärkte Epoxidharze Verwendung. Rumpfsektionen zur Herstellung von Flugzeugrümpfen werden beispielsweise mit Schalensegmenten gefertigt, die zum überwiegenden Teil mit faserverstärkten Verbundmaterialien hergestellt sind. Im Gegensatz zur klassischen Aluminiumbauweise ergeben sich jedoch bei solchen Verbundmaterialien unvermeidbare Fertigungstoleranzen, die beispielsweise aus einem nicht sicher reproduzierbaren Schrumpfungsverhalten bei der Aushärtung großformatiger Komponenten herrühren. Zwar entstehen auch im Fall der Aluminiumbauweise Maßabweichungen, die jedoch aufgrund der duktilen Eigenschaften der eingesetzten Aluminiumlegierungen, beispielsweise durch Drücken oder Ziehen, kompensiert werden können. Diese Vorgehensweise ist jedoch bei Verbundmaterialien aufgrund deren hoher Sprödigkeit nach erfolgter Aushärtung nicht anwendbar. Demzufolge müssen beim Zusammenfügen von Schalensegmenten zu Rumpfsektionen und der anschließenden Bildung von kompletten Flugzeugrumpfzellen durch das Zusammenfügen mehrerer Rumpfsektionen andere Ausgleichsmaßnahmen getroffen werden.

Zum Ausgleich der fertigungsbedingt unvermeidbaren Maßabweichungen kommt zur Spaltfüllung und zum Toleranzausgleich zwischen den zu fügenden Verbundbauteilen in der Regel ein flüssiges Fugenfüllmittel (engl. liquid shim) zum Einsatz. Bei diesem flüssigen Fugenfüllmittel handelt es sich in der Regel um ein aushärtbares Kunststoffmaterial auf Zweikomponentenbasis, z.B. ein Epoxidharz, das optional mit weiteren Füll- und/oder Zuschlagstoffen versetzt sein kann. Heutzutage erfolgt das Trocknen bzw. Aushärten des Fugenfüllmittels üblicherweise bei Raumtemperatur, sodass bei einem Zweikomponenten-Epoxidharz eine chemisch-physikalisch bedingte Prozesszeit von mehreren Stunden (in der Regel zwischen vier und neun Stunden) gegeben ist.

Eine beschleunigte Aushärtung des in die unvermeidbaren Fügespalte eingebrachten Fugenfüllmittels erfolgt vereinzelt durch im Fügebereich aufgelegte und elektrisch beheizbare Matten. Diese Matten erfordern jedoch einen hohen Energieeinsatz und führen zu einer unkontrollierten Erwärmung angrenzender Bereiche. Darüber hinaus ist der mittels Heizmatten im Spaltbereich erreichbare Temperaturverlauf aufgrund der thermischen Trägheit der Heizmatten nicht verzögerungsfrei zu steuern und die Anordnung der Heizmatten erfordert einen hohen Arbeitsaufwand.

Dokument WO 03/070838 offenbart ein Verfahren zum Toleranzausgleich zwischen einem ersten und einem zweiten zu fügenden Bauteil, von denen wenigstens eines einen faserverstärkten Kunststoffwerkstoff aufweist, mit den Schritten: Anordnen der Bauteile zueinander unter Belassen eines Spaltbereichs zwischen dem ersten und zweiten Bauteil; Verfüllen des Spaltbereichs zumindest abschnittweise mit einem unausgehärteten Kunststofffüllmittel, in welchem eingekapselter Katalysator dispergiert ist; und Anregen der Kapsel mittels Schallwellen, um das Kunststofffüllmittel auszuhärten.

Es ist daher Aufgabe der vorliegenden Erfindung, eine schnelle und präzise steuerbare Aushärtung flüssiger Fugenfüllmittel beim Zusammenfügen von Bauteilen zu ermöglichen.

Erfindungsgemäß wird diese Aufgabe durch ein Verfahren mit den Merkmalen des Patentanspruchs 1 gelöst.

Die der vorliegenden Erfindung zugrunde liegende Idee besteht darin, in einem aushärtbaren Kunststofffüllmittel, das als flüssiges Fugenfüllmittel (liquid shim) zum Füllen des Spaltbereichs zwischen zwei oder mehr Bauteilen verwendet wird, Nanopartikel derart zu dispergieren, dass von außen gezielt Energie lokal in die Nanopartikel eingebracht werden kann, um das Kunststoffmaterial auszuhärten. Unter dem Begriff "Nano-partikel" sind hierbei Feststoffpartikel mit einem Durchmesser von ca. 1 nm bis 100 nm zu verstehen. Vorzugsweise sind die Nanopartikeln und die Form der eingebrachten Energie so aufeinander abgestimmt, dass eine hohe Energieabsorption durch die Nanopartikel einer möglichst geringen Energieabsorption durch die Bauteile gegenübersteht.

Die geringe Größe der Nanopartikel ermöglicht die Bildung einer besonders stabilen Dispersion mit dem Kunststofffüllmittel. Dadurch, dass die Energie lokal in die im Kunststofffüllmittel dispergierten Nanopartikel eingebracht wird, ist eine räumlich exakt begrenzte und schnelle Erwärmung im Spaltbereich der zu fügenden Bauteile und damit eine punktgenaue Aushärtung des Kunststofffüllmittels, z.B. eines eingesetzten Zweikomponenten-Kunststoffes, innerhalb einer kurzen Zeit von weniger als 30 min möglich. Darüber hinaus lässt sich durch geeignetes Steuern der Energieeinbringung Wärmeeinwirkung zeitlich exakt begrenzen.

Bei dem Kunststofffüllmittel handelt es sich z.B. um eine Füllmasse und/oder eine Dichtmasse wie ein Epoxidharz auf Zweikomponentenbasis, das optional mit weiteren Zuschlagstoffen versetzt sein kann. Als Dichtmassen kommen beispielsweise herkömmliche Polyurethane auf Zweikomponentenbasis in Betracht.

In den Unteransprüchen finden sich vorteilhafte Ausgestaltungen und Verbesserungen der Erfindung.

Gemäß einer bevorzugten Weiterbildung weist der Spaltbereich eine Weite von 0,3 mm bis 2 mm.

Gemäß einer bevorzugten Weiterbildung sind die Nanopartikel, das Kunststofffüllmittel und die Art der eingebrachten Energie so gewählt, dass das Kunststofffüllmittel durch das lokale Einbringen von Energie gezielt erwärmt wird und durch die Wirkung der Wärme beschleunigt aushärtet. Vorzugsweise wird das Kunststofffüllmittel auf 40 °C bis 90 °C erwärmt, um das Kunststofffüllmittel besonders schnell und schonend auszuhärten.

Gemäß einer bevorzugten Weiterbildung sind die Nanopartikel, das Kunststofffüllmittel und die Art der eingebrachten Energie so gewählt, dass - zusätzlich oder alternativ zu einer Erwärmung - durch das lokale Einbringen von Energie eine von den Nanopartikeln katalysierte chemische Reaktion im Kunststofffüllmittel angeregt wird, um das Kunststofffüllmittel auszuhärten. Auf diese Weise können besonders kurze Aushärtzeiten erreicht werden.

Gemäß einer bevorzugten Weiterbildung erfolgt das lokale Einbringen von Energie durch Anregen der Nanopartikel mittels Ultraschallwellen.

Gemäß einer bevorzugten Weiterbildung erfolgt das lokale Einbringen von Energie durch das erste und/oder zweite Bauteil hindurch. Auf diese Weise kann auch in von außen schwer oder gar nicht zugänglichen Spalten das Kunststofffüllmaterial ausgehärtet werden.

Gemäß einer bevorzugten Weiterbildung weisen die Nanopartikel einen elektrisch leitfähigen, z.B. metallischen, Werkstoff auf, sodass durch das lokale Einbringen von Energie elektrische Ströme innerhalb des Kunststofffüllmittels erzeugbar sind. Vorzugsweise weist der Werkstoff eine geringe Dichte auf, um ein geringes Endgewicht der zusammengefügten Bauteile zu erreichen.

Gemäß einer bevorzugten Weiterbildung weisen die Nanopartikel einen Werkstoff mit einer hohen Wärmeleitfägigkeit auf, die vorzugsweise über der Wärmeleitfähigkeit des Kunststofffüllmittels ist. Auf diese Weise gelangt Wärme, die durch das lokale Einbringen von Energie in den Nanopartikeln entsteht, besonders rasch an die Oberfläche der Partikel und damit in das Kunststofffüllmittel.

Gemäß einer bevorzugten Weiterbildung weisen die Nanopartikel ein Ferrit und/oder ein Böhmit als Werkstoff auf.

Die Vorrichtung kann wahlweise mit nur einer Energieeinbringeinrichtung oder auch mit einer Vielzahl von Energieeinbringeinrichtungen ausgestattet sein. Beim Einsatz nur einer Energieeinbringeinrichtung kann diese nach der erfolgten Aushärtung des jeweils bearbeiteten Abschnittes bzw. Bereiches in einen angrenzenden Abschnitt versetzt werden, wodurch sich der Arbeitsaufwand erhöht. Um dabei unvollständig ausgehärtete Zonen zu vermeiden, ist in der Regel eine überlappende Arbeitsweise erforderlich, wodurch der Zeitaufwand weiter ansteigt. Demgegenüber ermöglicht eine Vorrichtung, die mit einer Vielzahl von gleichzeitig wirkenden Energieeinbringeinrichtungen ausgestattet ist, zwar die zeitgleiche Aushärtung großflächiger Spaltbereiche, erfordert im Gegenzug jedoch einen erhöhten konstruktiven Aufwand.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: Eine schematische Darstellung einer Vorrichtung zum Zusammenfügen zweier Bauteile gemäß einer Ausführungsform der Erfindung; und
- Fig. 2: eine perspektivische Prinzipdarstellung einer Vorrichtung gemäß einer weiteren Ausführungsform zur simultanen Aushärtung eines vollständigen Querstoßbereichs zwischen zu fügenden Rumpfsektionen.

In den Figuren bezeichnen dieselben Bezugszeichen gleiche oder funktionsgleiche Komponenten, soweit nichts Gegenteiliges angegeben ist.

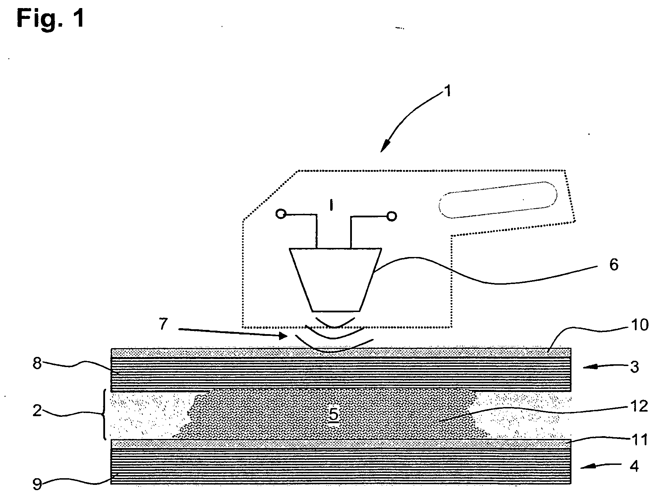

Figur 1 zeigt den prinzipiellen Aufbau einer Vorrichtung 1 zum Zusammenfügen zweier Bauteile 3, 4, die hier beispielhaft einen Teil der Außenhaut einer Flugzeugrumpfstruktur bilden. Beide Bauteile 3,4 sind im Wesentlichen mit einer Schicht 8, 9 aufgebaut, die jeweils ein kohlefaserverstärktes Epoxidharz aufweist. Exemplarisch dargestellte, für die Funktion der vorliegenden Vorrichtung nicht erforderliche Kaschierungen 10, 11 insbesondere in Gestalt eines Kupfergewebes, einer Kupferkaschierung oder eines Kupfernetzes, dienen primär als Blitzschutzeinrichtung für das Flugzeug. Zwischen den Bauteilen 3, 4, ist in einem Spaltbereich 2 zumindest bereichsweise ein Kunststoffmaterial 5, z.B. eine Dichtmasse oder eine Füllmasse, eingebracht.

Das Kunststoffmaterial 5 ist mit einer Vielzahl von Nanopartikeln versetzt, von denen ein Partikel 12 repräsentativ mit einer Bezugsziffer versehen ist. Die Nanopartikel sind mit einem Durchmesser von ca. 1 nm biss 100 nm ausgebildet. In der vorliegenden Ausführungsform werden beispielhaft Partikel aus einem elektrisch leitfähigen Werkstoff mit guter Wärmeleitfähigkeit wie z.B. einem Ferrit verwendet. Das Kunststoffmaterial 5 selbst bzw. die die Nanopartikel 12 einschließende Matrix ist z.B. mit einem thermisch aushärtbaren Zweikomponenten-Epoxidharzsystem gebildet.

Oberhalb des ersten Bauteils 3 befindet sich eine Energieeinbringeinrichtung 6 zur lokalen Einbringung von Energie in die Feststoffpartikel 12.

In der vorliegenden Ausführungsform werden unter Einwirkung von im Betrieb von der Energieeinbringeinrichtung 6 ausgehenden Schallwellen 7 Wirbelströme in den im Kunststofffüllmaterial dispergierten Nanopartikeln 12 erzeugt, die die Temperatur im Kunststoffmaterial 5 derart erhöhen, dass das Kunststoffmaterial 5 durch Erwärmung aushärtet.

Die Intensität der von der Energieeinbringeinrichtung 6 abgegebenen Energiestrahlung wird - in der vorliegenden Ausführungsform mittels der Stromstärke I eines zur Speisung der Energieeinbringeinrichtung 6 dienenden Versorgungsstroms - so gewählt, dass sich im auszuhärtenden Kunststoffmaterial 5 eine Temperatur zwischen 40 °C und 90 °C über einen Zeitraum von bis zu einer Stunde einstellt. Bei dem verwendeten Kunststoffmaterial 5 handelt es sich beispielsweise um Duroplaste mit den Bezeichnungen EA 9394 A/B von der Fa. Dexter Hyssol^{®}, Redux 870 A/B von der Fa. Hexcel^{®}, EA 9394.2 von der Fa. Dexter Hyssol^{®} oder Epibond 1590-3 A/B von der Fa. Vantico^{®}. Alternativ kann das Kunststoffmaterial 5 auch eine Dichtmasse bzw. ein Dichtmittel, wie zum Beispiel ein Polyurethan-Kunststoffmaterial auf Zweikomponentenbasis, sein. In dieser Konstellation ist im Allgemeinen eine Temperatur von etwa 50 °C im Bereich des Dichtmittels für eine forcierte Aushärtung ausreichend.

Beim Einsatz der Energieeinbringeinrichtung 6 ist, insbesondere im Fall eines großflächigen Spaltbereichs 2, der von der abgestrahlten Energie nicht zeitgleich durchsetzt wird, eine Positioniereinrichtung von Vorteil, mittels derer die Energieeinbringeinrichtung 6 über den Spaltbereich 2 automatisiert in definierten Bahnkurven hinweg führbar ist. Hierbei ist eine ausreichende Verweildauer der Energieeinbringeinrichtung 6 über den Spaltbereich 2 vorzusehen, um eine ausreichende thermische Härtung des Kunststoffmaterials 5 zu bewirken. Alternativ kann die Energieeinbringeinrichtung 6 - wie in der Fig. 1 mit der punktierten Umrissdarstellung angedeutet - auch eine Handhabe, wie beispielsweise einen Handgriff, aufweisen, die einen manuellen Einsatz der Energieeinbringeinrichtung 6 ermöglicht. In dieser Konstellation verfügt die Energieeinbringeinrichtung 6 bevorzugt über eine Laserzieleinrichtung, um den räumlichen Wirkungsbereich der von der Energieeinbringeinrichtung 6 generierten Energiestrahlung 7 für einen Anwender berührungslos optisch auf den Bauteilen 3,4 zu visualisieren. Hierdurch wird eine vollständige Aushärtung des Kunststoffmaterials 5 sicher gestellt.

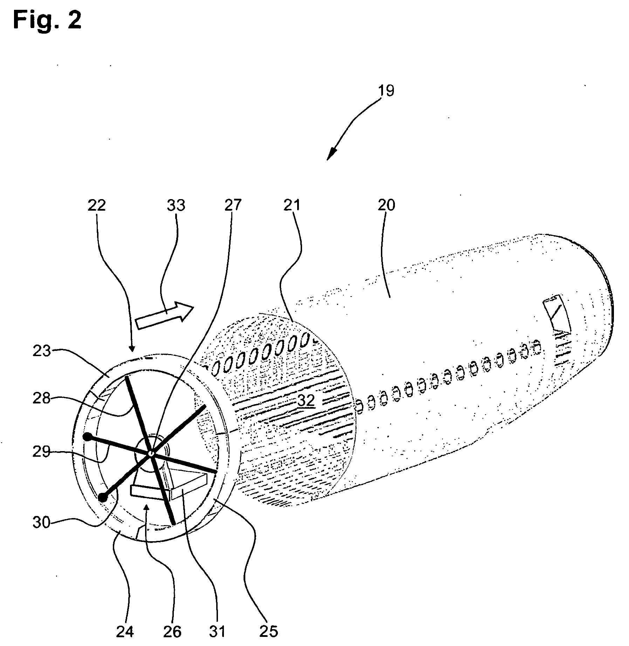

Figur 2 illustriert eine Ausführungsvariante einer Vorrichtung, mit der die gleichzeitige Aushärtung eines in einen umlaufenden Querstoßbereich einer Rumpfsektion eingebrachten Kunststofffüllmittels möglich ist.

An eine Heck-Rumpfsektion 20 als ein erstes Bauteil wird eine weitere, nicht dargestellte Rumpfsektion als ein zweites Bauteil angeschlossen. Die Vorrichtung 19 umfasst eine ringförmige Energieeinbringeinrichtung 22, deren Außendurchmesser - abzüglich eines Luftspaltes zum Toleranzausgleich - in etwa an die Querschnittsabmessungen bzw. die Querschnittsgeometrie der Rumpfsektion 20 im Querstoßbereich angepasst ist. Die Energieeinbringeinrichtung 22 ist im gezeigten Ausführungsbeispiel der Fig. 2 als ringförmige Wellenstrahlungsquelle mit drei aneinander schließenden 120°-Segmenten 23 bis 25 aufgebaut.

Aufgrund der in der Regel großen Querschnittsabmessungen der zu fügenden Rumpfsektionen, die in Abhängigkeit vom Flugzeugtyp einen Innenumfang von bis zu 25 m erreichen können und die eine ringförmige Energieeinbringeinrichtung 22 mit einem annähernd entsprechenden Außenumfang erfordern, kann es erforderlich sein, diese in Segmente wie die drei exemplarisch dargestellten Segmente 23 bis 25 oder eine höhere Zahl aufzuteilen.

Durch eine höhere Anzahl von Segmenten kann darüber hinaus eine ggf. notwendige Wasserkühlung der einzelnen Segmente konstruktiv vereinfacht werden, da für jedes Segment eine Zuleitung und eine Ableitung kleineren Durchmessers ausreichend ist. Durch die Segmentierung der Energieeinbringeinrichtung 22 wird zudem die zur Versorgung der einzelnen Segmente benötigte Versorgungsleistung verringert und die zur Ansteuerung feinstufige Regelung der Segmente z.B. durch eine Leistungselektronik vereinfacht. Ferner erlaubt die Segmentierung der Energieeinbringeinrichtung 22 eine Anpassung an lokal unterschiedlich große Krümmungsgrade der im Querstoßbereich 21 aneinander schließenden Rumpfsektionen und zudem eine Anpassung an unterschiedliche Gegebenheiten im Baukastenprinzip. Das Baukastenprinzip ermöglicht durch die Kombination einer Auswahl von Energieeinbringeinrichtungssegmenten aus einem begrenzten Vorrat von standardisierten Segmenten eine flexible Zusammenstellung der ringförmigen Energieeinbringeinrichtung 22, die auf einfache Art und Weise unterschiedlichen Querschnittsgeometrien und Querschnittsabmessungen von Rumpfsektionen anpassbar ist. Die einzelnen Segmente können mittels eines Stecksystems untereinander verbindbar sein, wobei ein optionales Verriegelungssystem vorhanden sein kann. Im Querstoßbereich 21 können innenseitig in den Rumpfsektionen 20 Vorrichtungen zur Anordnung, Ausrichtung und zeitweisen Befestigung der Energieeinbringeinrichtungssegmente vorgesehen sein.

Die ringförmige Energieeinbringeinrichtung 22 kann ferner eine optionale Zentralbefestigung 26, die mit insgesamt drei, sich in einem Mittelpunkt 27 kreuzenden Streben 28 bis 30 gebildet ist, aufweisen, um die Positionierung innerhalb der Rumpfsektion 20 zu erleichtern. Im Bereich des Mittelpunktes 27 ist eine Positioniereinrichtung 31 bzw. eine Sockelplatte angeordnet, die zur Ausrichtung und zum Aufstellen der ringförmigen Energieeinbringeinrichtung 22 innerhalb eines Innenbereiches 32 der Rumpfsektion 20 dient.

Als Vorbereitung für den Einsatz der Vorrichtung 19 wird in einer denkbaren Variante zunächst das flüssige Kunststofffüllmittel mit Nanopartikeln vermischt, deren Werkstoff auf die Form der von der Energieeinbringeinrichtung abgegebenen Energie abgestimmt ist. Im vorliegenden Fall werden z.B. wie im Ausführungsbeispiel aus Fig. 1 aus einem Ferrit bestehende Nanopartikel verwendet. Das Kunststofffüllmittel mit den darin dispergierten Nanopartikeln wird im Querstoßbereich 21 der Rumpfsektion 20 zur Spaltfüllung und/oder zum Toleranzausgleich zwischen zu fügende Bauteile eingebracht, z.B. durch flächiges Auftragen mit anschließendem Fügen oder durch Einspritzen in Vorbohrlöcher.

Anschließend wird die komplett montierte ringförmige Energieeinbringeinrichtung 22 mittels der Positioniereinrichtung 31 in Richtung des Pfeils 33 in den einseitig noch offenen Innenbereich 32 der Rumpfsektion 20 hinein verfahren, so dass der gesamte Querstoßbereich 21 möglichst vollständig von der abgestrahlten Energie der ringförmigen Energieeinbringeinrichtung 22, durchsetzt wird. Abschließend wird die anzufügende Rumpfsektion in Bezug zur Rumpfsektion 20 ausgerichtet bzw. mit dieser zusammen gefahren und mit dieser beispielsweise durch eine Stoßverbindung unter Einsatz einer Querstoßlasche verschraubt und/oder vernietet. Alternativ kann auch eine Überlappverbindung ohne Querstoßlasche erfolgen.

Nachdem der Fügeprozess zumindest teilweise beendet ist, das heißt die Rumpfsektionen zumindest zur Erzielung einer hinreichenden Lagesicherung provisorisch geheftet sind, kann mittels der ringförmigen Energieeinbringeinrichtung 22 das vorab in den Spaltbereich zwischen den Rumpfsektionen eingebrachte Kunststoffmaterial ausgehärtet werden. Abschließend kann die ringförmige Energieeinbringeinrichtung 22 wieder in ihre drei Segmente 23 bis 25 zerlegt und einschließlich der Positioniereinrichtung 31 und der Streben 28 bis 30 aus den zusammengefügten Rumpfsektionen entfernt werden.

Für den Fall, dass die zu fügenden Rumpfsektionen sowohl vor als auch nach dem Einbringen und Aushärten des zur Spaltfüllung erforderlichen Kunststoffmaterials (liquid shim) ohnehin wieder auseinander gefahren werden müssen, kann die Energieeinbringeinrichtung 22 auch in die bereits zueinander positionierten und ausgerichteten Rumpfsektionen hinein montiert werden. Da die Rumpfsektionen zu diesem Zeitpunkt bereits mit dem Passagier- und Frachtfußboden ausgerüstet sind, ergeben sich Abstützungs-, Montage- und Abstellmöglichkeiten für die einzelnen Segmente bzw. die gesamte ringförmige Energieeinbringeinrichtung 22. Die Zentralbefestigung 26 mit der Positioniereinrichtung 31 und den Streben 28 bis 30 bzw. der Sockelplatte kann entfallen, wenn die Rumpfsektionen im Querstoßbereich 21 über Vorkehrungen (z.B. Spanthalter für Energieeinbringeinrichtungssegmente) zur zeitweisen Befestigung der Energieeinbringeinrichtungssegmente verfügen.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können, in Abstimmung mit der Form der lokal eingebrachten Energie, Nanopartikel aus elektrisch nichtleitenden Werkstoffen oder aus mehreren Werkstoffen heterogen zusammengesetzte Nanopartikel verwendet werden.

### Bezugszeichenliste

- 1, 19: Vorrichtung
- 2: Spaltbereich
- 3: erstes Bauteil
- 4: zweites Bauteil
- 5: Kunststofffüllmittel
- 6, 22: Energieeinbringeinrichtung
- 7: Energiestrahlung (Schallwellen)
- 8: Schicht (CFK-Material)
- 9: Schicht (CFK-Material)
- 10: Kaschierung
- 11: Kaschierung
- 12: Nanopartikel
- 20: Rumpfsektion
- 21: Querstoßbereich
- 23: 120°-Segment
- 24: 120°-Segment
- 25: 120°-Segment
- 26: Zentralbefestigung
- 27: Mittelpunkt
- 28: Strebe
- 29: Strebe
- 30: Strebe
- 31: Positioniereinrichtung
- 32: Innenbereich (Rumpfsektion)
- 33: Pfeil

## Patentansprüche

1. Verfahren zum Toleranzausgleich zwischen einem ersten (3) und einem zweiten (4) zu fügenden Bauteil, von denen wenigstens eines (3) einen faserverstärkten Kunststoffwerkstoff aufweist, mit den Schritten:
Anordnen der Bauteile (3, 4) zueinander unter Belassen eines Spaltbereichs (2) zwischen dem ersten (3) und zweiten (4) Bauteil;
Verfüllen des Spaltbereichs (2) zumindest abschnittweise mit einem unausgehärteten Kunststofffüllmittel (5), in welchem Feststoffpartikel (12) mit einer Partikelgröße von 1 nm bis 100 nm dispergiert sind; und
Erwärmen des Kunststofffüllmittels (5) durch lokales Einbringen von Energie in die Feststoffpartikel (12), durch Anregen der Feststoffpartikel (12) mittels Schallwellen, um das Kunststofffüllmittel (5) auszuhärten.

2. Verfahren nach Anspruch 1,
**dadurch gekennzeichnet,**
**dass** der Spaltbereich (2) eine Weite von 0,3 mm bis 2 mm aufweist.

3. Verfahren nach Anspruch 1 oder 2,
**gekennzeichnet durch**
einen Schritt des Anregens, **durch** das lokale Einbringen von Energie, einer von den Feststoffpartikeln (12) katalysierten chemischen Reaktion im Kunststofffüllmittel (5), um das Kunststofffüllmittel (5) auszuhärten.

4. Verfahren nach wenigstens einem der vorhergehenden Ansprüche,
**dadurch gekennzeichnet,**
**dass** das lokale Einbringen von Energie durch Anregen der Feststoffpartikel (12) mittels Ultraschallwellen erfolgt.

5. Verfahren nach wenigstens einem der vorhergehenden Ansprüche,
**dadurch gekennzeichnet,**
**dass** das lokale Einbringen von Energie durch das erste (3) und/oder zweite (4) Bauteil hindurch erfolgt.

6. Verfahren nach wenigstens einem der vorhergehenden Ansprüche,
**dadurch gekennzeichnet,**
**dass** die Feststoffpartikel (12) einen Werkstoff mit einer höheren Wärmeleitfähigkeit als das Kunststofffüllmittel (5) aufweisen.

7. Verfahren nach wenigstens einem der vorhergehenden Ansprüche,
**dadurch gekennzeichnet,**
**dass** die Feststoffpartikel (12) Böhmit aufweisen.

## Claims

1. A method for the tolerance compensation between a first component (3) and a second component (4) that are to be joined, of which at least one component (3) comprises a fibre-reinforced synthetic material, having the steps:
arranging the components (3, 4) with respect to one another whilst leaving a spacing region (2) between the first component (3) and the second component (4);
filling the spacing region (2) at least in sections with an uncured synthetic material filling material (5) in which solid particles (12) having a particle size from 1 nm to 100 nm are dispersed; and
heating the synthetic material filling material (5) by means of the local introduction of energy into the solid particles (12) by virtue of exciting the solid particles (12) using sound waves so as to cure the synthetic material filling material (5).

2. The method as claimed in claim 1,
**characterized in**
**that** the spacing region (2) comprises a width of 0.3 mm to 2 mm.

3. The method as claimed in claim 1 or 2,
**characterized by**
a step of exciting, by means of the local introduction of energy, a chemical reaction that is catalyzed by the solid particles (12) in the synthetic material filling material (5) so as to cure the synthetic material filling material (5).

4. The method as claimed in at least one of the preceding claims,
**characterized in**
**that** the local introduction of energy by means of exciting the solid particles (12) is performed using ultrasound waves.

5. The method as claimed in any one of the preceding claims,
**characterized in**
**that** the local introduction of energy is performed through the first component (3) and/or the second component (4).

6. The method as claimed in at least one of the preceding claims,
**characterized in**
**that** the solid particles (12) comprise a material that has a higher heat conducting capacity than the synthetic material filling material (5).

7. The method as claimed in any one of the preceding claims,
**characterized in**
**that** the solid particles comprise boehmite (12).

## Revendications

1. Procédé de compensation de tolérances entre un premier composant (3) et un deuxième composant (4) à assembler, dont au moins un (3) présente une matière plastique renforcée par fibre, comprenant les étapes :
disposition des composants (3, 4) l'un par rapport à l'autre en laissant une zone d'espacement (2) entre le premier composant (3) et le deuxième composant (4) ;
remplissage de la zone d'espacement (2) au moins en partie avec une masse de remplissage (5) de matière plastique non durcie, dans laquelle masse des particules de matière solide (12) ayant une taille de particule de 1 nm à 100 nm sont dispersées ; et
échauffement de la masse de remplissage (5) de matière plastique par apport local d'énergie dans les particules de matière solide (12) par excitation des particules de matière solide (12) au moyen d'ondes sonores afin de durcir la masse de remplissage (5) de matière plastique.

2. Procédé selon la revendication 1,
**caractérisé en ce que**
que la zone d'espacement (2) présente une largeur de 0,3 mm à 2 mm.

3. Procédé selon la revendication 1 ou 2, **caractérisé par** une étape d'excitation au moyen de l'apport local d'énergie, d'une réaction chimique catalysée par les particules de matière solide (12) dans la masse de remplissage (5) de matière plastique afin de durcir la masse de remplissage (5) de matière plastique.

4. Procédé selon au moins l'une quelconque des revendications précédentes,
**caractérisé en ce que**
l'apport local d'énergie par excitation des particules de matière solide (12) est réalisé au moyen d'ondes ultrasonores.

5. Procédé selon au moins l'une quelconque des revendications précédentes,
**caractérisé en ce que**
l'apport local d'énergie est réalisé en traversant le premier composant (3) et/ou le deuxième composant (4).

6. Procédé selon au moins l'une quelconque des revendications précédentes,
**caractérisé en ce que**
les particules de matière solide (12) présentent un matériau ayant une conductivité thermique plus élevée que la masse de remplissage (5) de matière plastique.

7. Procédé selon au moins l'une quelconque des revendications précédentes,
**caractérisé en ce que**
les particules de matière solide (12) présentent de la bohémite.
